# FASCICULE DE BREVET EUROPEEN

(11) **EP 1 890 582 B1**
(45) Date de publication et mention de la délivrance du brevet: **26.11.2008**
(21) Numéro de dépôt: 06743783.0
(22) Date de dépôt: 10.05.2006
(51) Int. Cl.: A47J 43/07, A47J 44/00

(54) **APPAREIL ELECTROMENAGER DE PREPARATION CULINAIRE COMPORTANT UNE TRAPPE VENANT MASQUER UN ORGANE**
ELEKTRISCHES HAUSHALTSGARGERÄT MIT EINER EIN ELEMENT VERDECKENDEN KLAPPTÜR
ELECTRIC HOUSEHOLD COOKING APPLIANCE COMPRISING A HATCH WHICH CONCEALS AN ELEMENT

(30) Priorité: 12.05.2005 FR 0504775
(43) Date de publication de la demande: 27.02.2008
(73) Titulaire: SEB SA, 69130 Ecully (FR)
(72) Inventeur: MARTIN, Philippe, 53940 Le Genest Saint Isle (FR); FERON, Stéphanie, 53440 Marcille la Ville (FR)
(74) Mandataire: Kiehl, Hubert
(86) Numéro de dépôt international: PCT/FR2006/001040
(87) Numéro de publication internationale: WO 2006/120341

(56) Documents cités:
- EP-A- 1 254 624
- GB-A- 2 082 713
- US-A- 5 524 530
- US-A1- 2002 078 834
- US-A1- 2003 034 200

## Description

La présente invention concerne le domaine technique général des appareils électroménagers de préparation culinaire tels que les robots ménagers multifonctions. La présente invention se rapporte plus particulièrement à un appareil comportant un boîtier muni d'une ouverture donnant accès à un organe, tel une sortie d'entraînement, l'appareil comportant une trappe coulissante pouvant occuper une position fermée dans laquelle la trappe vient fermer l'ouverture pour masquer l'organe.

Il est connu sur certains appareils batteurs du commerce, tel que le batteur KRUPS 3 mix 7007, comportant plusieurs sorties d'entraînement permettant l'accouplement avec divers types d'accessoires, d'avoir l'une des sorties qui est masquée par une trappe coulissante. Cette trappe coulissante présente l'avantage de masquer la sortie d'entraînement, lorsque celle-ci n'est pas utilisée, ce qui permet à la fois d'améliorer l'aspect visuel de l'appareil et d'augmenter la sécurité en limitant l'accès à cet organe rotatif. Cependant, une telle trappe est habituellement portée par des rails de guidage venant de moulage avec le corps du boîtier, qui sont portés par la paroi interne du corps du boîtier, ce qui présente l'inconvénient de rendre difficile le montage de la trappe, notamment à cause de l'accès étriqué à l'intérieur du corps du boîtier. De plus, lorsque le corps du boîtier est obtenu par l'assemblage de deux demi-coquilles dont le plan de jonction se trouve au niveau de l'ouverture, le jeu dans le positionnement relatif des coquilles peut engendrer un décalage entre les rails de guidage portés par chacune des deux coquilles de sorte qu'il en résulte des difficultés de coulissement de la trappe, ce qui est mal perçu par l'utilisateur. Le document US 2002/078834 décrit un appareil électroménager de préparation culinaire.

L'invention qui suit vise à pallier ces inconvénients en proposant un appareil électroménager de préparation dans lequel l'agencement de la trappe offre une grande facilité de montage et possède un fonctionnement optimisé tout en étant simple et économique à réaliser.

Le but de l'invention est atteint par un appareil électroménager de préparation culinaire comportant un boîtier comprenant une paroi munie d'une ouverture donnant un accès à un organe disposé dans le boîtier, l'appareil comportant une trappe pouvant occuper une position fermée dans laquelle la trappe vient fermer l'ouverture pour masquer ledit organe et une position ouverte dans laquelle la trappe autorise l'accès à l'organe, caractérisé en ce que la trappe est portée par une pièce support disposée à l'intérieur du boîtier et indépendante de la paroi du boîtier.

Par pièce support indépendante de la paroi du boîtier, on entend une pièce support n'étant pas fixée ou liée directement à la paroi du boîtier munie de l'ouverture.

Une telle caractéristique présente l'avantage de faciliter le montage de la trappe en permettant, avant la mise en place du boîtier et donc avec une très bonne accessibilité, le montage de la trappe sur une pièce support destinée à se trouver à l'intérieur du boîtier.

Selon une autre caractéristique de l'invention, la trappe et la pièce support forment un module fonctionnel indépendant qui vient se fixer sur un élément interne à l'appareil, indépendamment de la présence du boîtier.

Cette caractéristique permet de simplifier encore le montage de la trappe coulissante sur sa pièce support en permettant son montage sous la forme d'un module fonctionnel pouvant être assemblé en dehors de l'appareil. De plus une telle caractéristique permet une réparation facile en cas de disfonctionnement de la trappe, en changeant très facilement le module fonctionnel constitué par la trappe et sa pièce support.

Selon une autre caractéristique de l'invention, la trappe est coulissante.

Selon une autre caractéristique de l'invention, la trappe coulissante est guidée en translation par des rails de guidage portés par la pièce support.

Selon une autre caractéristique de l'invention, la trappe coulissante est maintenue sur la pièce support par des doigts s'engageant sous la pièce support.

Selon une autre caractéristique de l'invention, l'ouverture présente une forme oblongue et la trappe présente une forme convexe, les rails de guidage possédant un rayon de courbure proche du rayon de courbure de la trappe.

Selon encore une autre caractéristique de l'invention, l'organe est un entraîneur rotatif relié à un moteur et prévu pour s'accoupler avec un accessoire muni d'un outil de travail rotatif, tel qu'un récipient blender.

Selon encore une autre caractéristique de l'invention, l'entraîneur rotatif est disposé au fond d'une cavité délimitée par un manchon.

Selon une autre caractéristique de l'invention, la pièce support comporte une bague s'emmanchant sur le manchon.

Selon une autre caractéristique de l'invention, la bague repose sur un ressort permettant une mobilité axiale de la bague sur le manchon.

Selon une autre caractéristique de l'invention, le manchon est porté par un bâti supportant le moteur.

Selon une autre caractéristique de l'invention, l'ouverture présente des dimensions supérieures aux dimensions de la cavité, la pièce support comportant une paroi sur le pourtour de la cavité venant en regard de l'ouverture.

Selon encore une autre caractéristique de l'invention, la cavité est excentrée par rapport au centre de l'ouverture.

Selon une autre caractéristique de l'invention, l'entraîneur rotatif qui peut être masqué par la trappe correspond à une sortie d'entraînement secondaire de l'appareil, l'appareil comportant par ailleurs un entraîneur rotatif principal, la trappe coulissante coopérant avec un dispositif de détection de la position de la trappe pour interrompre l'entraînement de l'entraîneur rotatif principal lorsque la trappe est en position ouverte.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- La figure 1 est une vue d'ensemble, en perspective, d'un appareil électroménager de préparation culinaire muni d'une trappe coulissante selon un mode particulier de réalisation de l'invention, l'appareil étant représenté avec un récipient blender en cours d'assemblage.
- la figure 2 est une vue partielle, en perspective, du caisson latéral de l'appareil de la figure 1, la trappe étant représentée en position fermée ;
- la figure 3 est une vue similaire à la figure 2 représentant la trappe en position ouverte ;
- la figure 4 est une vue en perspective éclatée du caisson de la figure 2 ;
- la figure 5 est une vue en perspective du montant de l'appareil sans le corps du boîtier ;

Seuls les éléments nécessaires à la compréhension de l'invention ont été représentés. Pour faciliter la lecture des dessins les mêmes éléments portent les mêmes références d'une figure à l'autre.

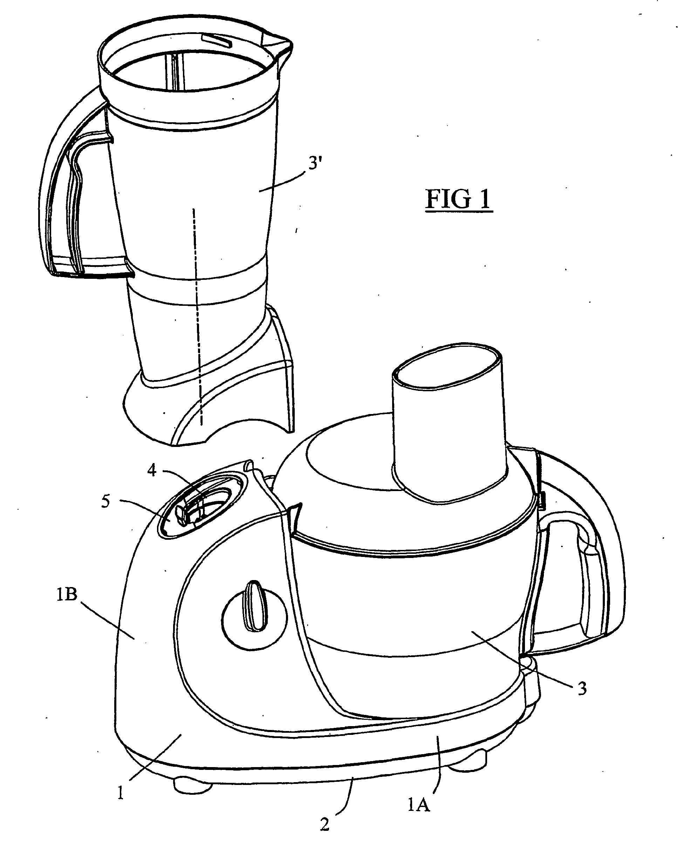

Le robot ménager ou appareil électroménager de préparation culinaire illustré à la figure 1 comprend un boîtier 1 en forme de L reposant sur un socle 2, le boîtier 1 comprenant une embase 1A destinée à recevoir un récipient 3 et un caisson 1 B adjacent à l'embase 1 A dans lequel est disposé un moteur entraînant, par l'intermédiaire d'une transmission, un outil rotatif au travers du fond du récipient 3.

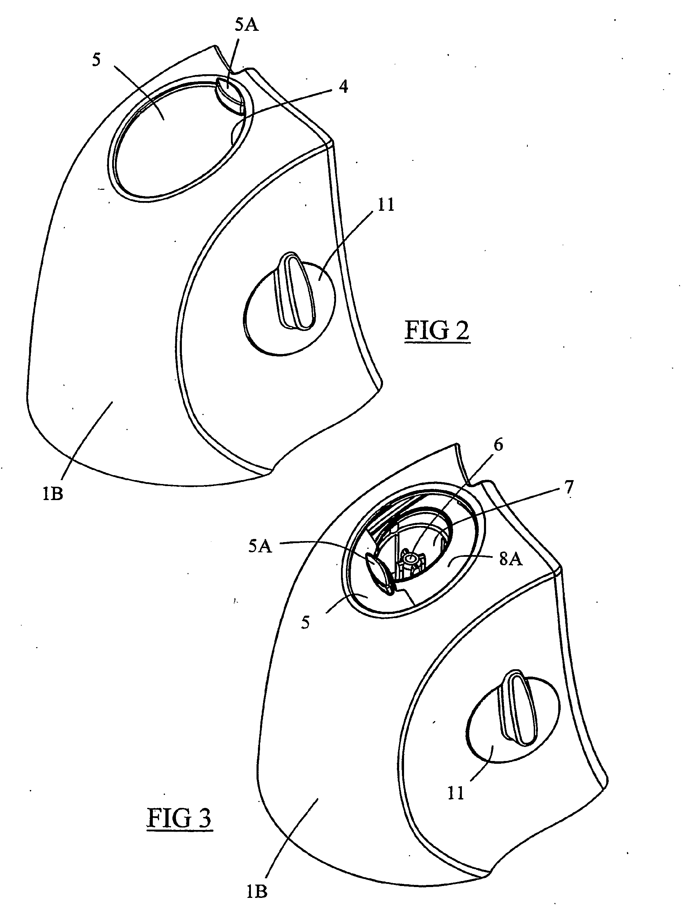

Conformément à la figure 2, le caisson 1 B présente une paroi qui est munie dans sa partie supérieure d'une ouverture 4 oblongue de grande dimension, présentant par exemple une longueur de l'ordre de 6 cm et une largeur de l'ordre de 5 cm, l'ouverture 4 étant fermée par une trappe 5 coulissante de forme convexe présentant une poignée 5A à l'une de ses extrémités.

Comme on peut le voir sur la figure 3, la trappe coulissante 5 peut occuper une position ouverte dans laquelle l'ouverture 4 du boîtier 1 donne accès à une sortie d'entraînement munie d'un entraîneur 6 rotatif faisant saillie au fond d'une cavité 7 oblongue de plus faibles dimensions que les dimensions de l'ouverture 4. L'entraîneur rotatif 6 est relié au moteur par un mécanisme de transmission, non représenté sur les figures, qui assure l'entraînement en rotation de l'entraîneur 6 à la mise en marche du moteur.

La partie supérieure du caisson 1 B est prévue pour recevoir l'embase de forme complémentaire d'un récipient blender 3', représenté uniquement sur la figure 1, l'embase du récipient 3' comprenant une bague femelle s'insérant dans la cavité 7 pour s'accoupler avec l'entraîneur rotatif 6 afin d'assurer l'entraînement rotatif d'un outil de coupe présent dans le récipient 3'.

De manière avantageuse, la cavité 7 est excentrée par rapport au centre de l'ouverture 4 de manière à décaler la sortie d'entraînement pour dégager du volume pour un mécanisme de commande du moteur actionné par un bouton 11.

La cavité 7 oblongue est entourée d'une paroi 8A disposée en regard de l'ouverture et venant masquer le pourtour de la cavité 7 en épousant la courbure de la paroi du caisson 1B au niveau de l'ouverture 4. Cette paroi 8A, disposée sous la trappe coulissante lorsque cette dernière est fermée, peut avantageusement comporter des marquages illustrant par exemple le type d'accessoire pouvant être connecté sur l'entraîneur 6. Cette paroi 8A présente également l'avantage de former un bouclier de protection qui protège les éléments disposés à l'intérieur du boîtier 1 contre un éventuel renversement de liquide au-dessus de l'ouverture 4.

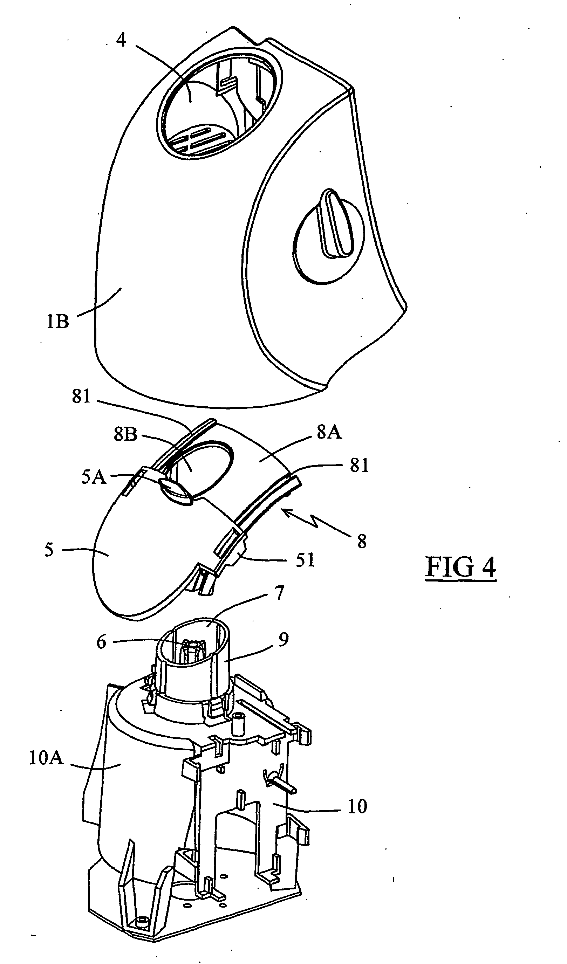

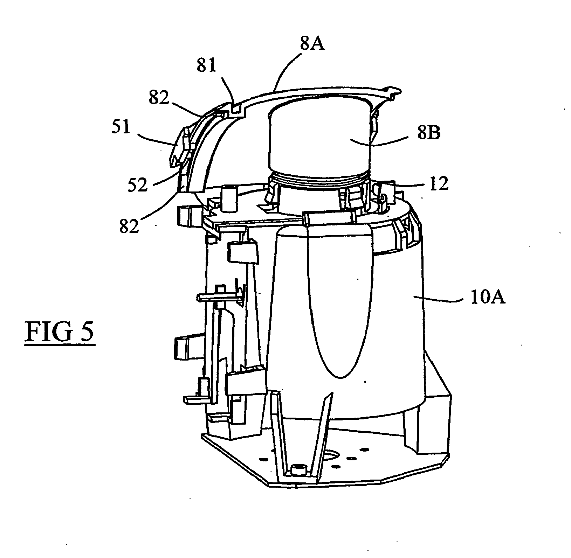

Conformément aux figures 4 et 5, la paroi 8A appartient à une platine 8 qui comporte une bague 8B venant s'emmancher sur un manchon 9 délimitant la cavité oblongue 7. Le manchon 9 est porté par un bâti 10 reposant sur le socle 2 de l'appareil, non représenté sur cette figure, le bâti 10 étant muni d'un logement 10A recevant le moteur relié à l'entraîneur 6. Afin d'assurer le bon positionnement angulaire de la platine 8 par rapport au bâti 10, la bague 8B comporte des nervures internes s'engageant dans des rainures externes du manchon 9. Un ressort 12, visible uniquement sur la figure 5, est avantageusement interposé entre la surface inférieure de la bague 8B et le bâti 10 de sorte que la platine est mobile en translation sur le manchon 9 en étant repoussé vers le haut par le ressort 12.

Plus particulièrement selon l'invention, la paroi 8A de la platine supporte la trappe 5 coulissante, la paroi 8A présentant deux rainures 81 sur sa face supérieure qui coopèrent avec des patins portés par la face inférieure de la trappe 5 pour assurer le guidage en translation de la trappe 5. De manière avantageuse, les rails de guidage et les patins peuvent être recouverts d'un revêtement favorisant le glissement, tel que du Téflon

Comme on peut mieux le voir sur la figure 5, la trappe 5 comporte également des bras latéraux 51 qui supportent des doigts 52 s'engageant latéralement sous les bords de la paroi 8A pour empêcher le soulèvement de la trappe 5 par rapport à la paroi 8A, les doigts 52 coopérant également avec des butées 82 présentes sous la paroi pour limiter la course en translation de la trappe 5.

Par cette construction, la trappe coulissante 5 associée à la platine 8 forme un module indépendant qui est rapporté sur le bâti 10 du moteur. La trappe 5 peut donc être montée sur la platine 8 préalablement au montage de la platine 8 sur le bâti 10, ce qui simplifie grandement son montage. Une fois la platine 8 emmanchée sur le manchon 9 du bâti 10, le boîtier 1 peut être rapporté sur le socle 2 de l'appareil, les jeux de construction étant adaptés pour que la surface supérieure de la trappe 5 vienne à proximité immédiate ou au contact de la surface inférieure de la paroi, du caisson 1 B en bordure de l'ouverture 4, le ressort 12 se comprimant lorsque le boîtier 1 vient au contact de la platine 8 pour absorber les différences de niveau liées aux dispersions de fabrication. Le ressort 12 présente ainsi l'avantage de permettre à l'ensemble trappe 5 et platine 8 d'être toujours au plus près du caisson 1 B afin de limiter les jeux liés aux dispersions de fabrication.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la trappe pourra avantageusement être associée à un système de détection de la position de la trappe de manière à interrompre l'entraînement de l'outil rotatif situé dans le récipient principal lorsque la trappe est ouverte.

Ainsi, la trappe pourra présenter des formes et des courbures diverses sans pour autant sortir du domaine de protection de l'invention.

Ainsi, dans une variante de réalisation, une lèvre souple pourra être surmoulée sur le pourtour interne de l'ouverture pour parfaire l'étanchéité entre la trappe et l'ouverture.

## Revendications

1. Appareil électroménager de préparation culinaire comportant un boîtier (1) comprenant une paroi munie d'une ouverture (4) donnant un accès à un organe (6) disposé dans le boîtier, ledit appareil comportant une trappe (5) pouvant occuper une position fermée dans laquelle ladite trappe (5) vient fermer l'ouverture pour masquer ledit organe et une position ouverte dans laquelle la trappe (5) autorise l'accès audit organe (6), **caractérisé en ce que** la trappe (5) est portée par une pièce support (8) disposée à l'intérieur du boîtier (1) et indépendante de la paroi du boîtier (1).

2. Appareil électroménager selon la revendication 1, **caractérisé en ce que** la trappe (5) et la pièce support (8) forment un module fonctionnel indépendant qui vient se fixer sur un élément (9) interne à l'appareil, indépendamment de la présence du boîtier (1).

3. Appareil électroménager selon la revendication 2, **caractérisé en ce que** la trappe (5) est coulissante.

4. Appareil électroménager selon la revendication 3, **caractérisé en ce que** la trappe (5) coulissante est guidée en translation par des rails de guidage (81) portés par la pièce support (8).

5. Appareil électroménager selon la revendication 4, **caractérisé en ce que** la trappe (5) coulissante est maintenue sur la pièce support (8) par des doigts (52) s'engageant sous la pièce support (8).

6. Appareil électroménager selon l'une quelconque des revendications 1 à 5, **caractérisé en ce que** ladite ouverture (4) présente une forme oblongue et **en ce que** la trappe (5) présente une forme convexe, lesdits rails de guidage (81) possédant un rayon de courbure proche du rayon de courbure de la trappe (5).

7. Appareil électroménager selon l'une quelconque des revendications 1 à 6, **caractérisé en ce que** ledit organe (6) est un entraîneur rotatif relié à un moteur et prévu pour s'accoupler avec un accessoire muni d'un outil de travail rotatif, tel qu'un récipient blender.

8. Appareil électroménager selon la revendication 7, **caractérisé en ce que** ledit entraîneur rotatif (6) est disposé au fond d'une cavité (7) délimitée par un manchon (9).

9. Appareil électroménager selon la revendication 8, **caractérisé en ce que** ladite pièce support (8) comporte une bague (8B) s'emmanchant sur ledit manchon (9).

10. Appareil électroménager selon la revendication 9, **caractérisé en ce que** ladite bague (8b) repose sur un ressort (12) permettant une mobilité axiale de la bague (8b) sur le manchon (9).

11. Appareil électroménager selon l'une quelconque des revendications 8 ou 9, **caractérisé en ce que** ledit manchon (9) est porté par un bâti (10) supportant ledit moteur.

12. Appareil électroménager selon l'une quelconque des revendications 8 à 11, **caractérisé en ce que** ladite ouverture (4) présente des dimensions supérieures aux dimensions de ladite cavité (7) et **en ce que** ladite pièce support (8) comporte une paroi (8A) sur le pourtour de la cavité (7) venant en regard de ladite ouverture (4).

13. Appareil électroménager selon la revendication 12, **caractérisé en ce que** la cavité (7) est excentrée par rapport au centre de l'ouverture (4).

14. Appareil électroménager selon l'une quelconque des revendications 7 à 13, **caractérisé en ce que** ledit entraîneur rotatif (6) qui peut être masqué par la trappe (5) correspond à une sortie d'entraînement secondaire de l'appareil, l'appareil comportant par ailleurs un entraîneur rotatif principal, et **en ce que** ladite trappe (5) coopère avec un dispositif de détection de la position de la trappe pour interrompre l'entraînement de l'entraîneur rotatif principal lorsque la trappe (5) est en position ouverte.

## Claims

1. A household electrical appliance for preparing food, which appliance has a housing (1) including a wall provided with an opening (4) giving access to a member (6) disposed inside the housing, said appliance being provided with a flap (5) suitable for taking up a closed position in which said flap (5) closes off the opening so as to mask said member and an open position in which the flap (5) gives access to said member (6), said household electrical appliance being **characterized in that** the flap (5) is carried by a support piece (8) that is disposed inside the housing (1) and that is independent of the wall of the housing (1).

2. A household electrical appliance according to claim 1, **characterized in that** the flap (5) and the support piece (8) form an independent functional module that is fastenable to an element (9) internal to the appliance, independently of the presence of the housing (1).

3. A household electrical appliance according to claim 2, **characterized in that** the flap (5) is a sliding flap.

4. A household electrical appliance according to claim 3, **characterized in that** the sliding flap (5) is guided in translation by guide rails (81) carried by the support piece (8).

5. A household electrical appliance according to claim 4, **characterized in that** the sliding flap (5) is held on the support piece (8) by fingers (52) that engage under the support piece (8).

6. A household electrical appliance according to any one of claims 1 to 5, **characterized in that** said opening (4) has an oblong shape, and **in that** the flap (5) presents a convex shape, said guide rails (81) having a radius of curvature close to the radius of curvature of the flap (5).

7. A household electrical appliance according to any one of claims 1 to 6, **characterized in that** said member (6) is a rotary driver connected to a motor and designed to be coupled to an accessory provided with a rotary tool, such as a blender receptacle.

8. A household electrical appliance according to claim 7, **characterized in that** said rotary driver (6) is disposed at the bottom of a cavity (7) defined by a sleeve (9).

9. A household electrical appliance according to claim 8, **characterized in that** said support piece (8) is provided with a ring (8B) that fits over said sleeve (9).

10. A household electrical appliance according to claim 9, **characterized in that** said ring (8B) rests on a spring (12) enabling the ring (8B) to move axially on the sleeve (9).

11. A household electrical appliance according to claim 8 or claim 9, **characterized in that** said sleeve (9) is carried by a frame (10) supporting said motor.

12. A household electrical appliance according to any one of claims 8 to 11, **characterized in that** said opening (4) has dimensions greater than the dimensions of said cavity (7), and **in that** said support piece (8) is provided with a wall (8A) around the periphery of the cavity (7) that comes to face said opening (4).

13. A household electrical appliance according to claim 12, **characterized in that** the cavity (7) is off-center relative to the center of the opening (4).

14. A household electrical appliance according to any one of claims 7 to 13, **characterized in that** said rotary driver (6) that can be masked by the flap (5) corresponds to a secondary driver outlet of the appliance, said appliance also having a main rotary driver, and **in that** said flap (5) co-operates with a device for detecting the position of the flap so as to interrupt drive to the main rotary driver when the flap (5) is in the open position.

## Patentansprüche

1. Elektrohaushaltsgerät zur Nahrungszubereitung mit einem Gehäuse (1), das eine Wand aufweist, die mit einer Öffnung (4) versehen ist, die einen Zugang zu einem im Gehäuse angeordneten Organ (6) eröffnet, wobei das Gerät eine Klappe (5) aufweist, die eine geschlossene Stellung, in welcher die Klappe (5) die Öffnung verschließt, um das Organ zu verdecken, und eine offene Stellung einnehmen kann, in welcher die Klappe (5) den Zugang zu dem Organ (6) zulässt, **dadurch gekennzeichnet, dass** die Klappe (5) von einem Trägerteil (8) getragen ist, der innerhalb des Gehäuses (1) angeordnet und von der Wand des Gehäuses (1) unabhängig ist.

2. Elektrohaushaltsgerät nach Anspruch 1, **dadurch gekennzeichnet, dass** die Klappe (5) und der Trägerteil (8) ein unabhängiges, funktionales Modul bilden, das sich an einem Element (9) innerhalb des Geräts unabhängig vom Vorhandensein des Gehäuses (1) befestigen lässt.

3. Elektrohaushaltsgerät nach Anspruch 2, **dadurch gekennzeichnet, dass** die Klappe (5) verschiebbar ist.

4. Elektrohaushaltsgerät nach Anspruch 3, **dadurch gekennzeichnet, dass** die verschiebbare Klappe (5) durch Führungsschienen (81) translatorisch geführt ist, die vom Trägerteil (8) getragen sind.

5. Elektrohaushaltsgerät nach Anspruch 4, **dadurch gekennzeichnet, dass** die verschiebbare Klappe (5) am Trägerteil (8) durch Finger (52) gehalten ist, die unter den Trägerteil (8) eingreifen.

6. Elektrohaushaltsgerät nach einem der Ansprüche 1 bis 5, **dadurch gekennzeichnet, dass** die Öffnung (4) eine längliche Form und die Klappe (5) eine konvexe Form aufweist, wobei die Führungsschienen (81) einen Krümmungsradius besitzen, der dem Krümmungsradius der Klappe (5) nahe kommt.

7. Elektrohaushaltsgerät nach einem der Ansprüche 1 bis 6, **dadurch gekennzeichnet, dass** das Organ (6) ein drehbarer Mitnehmer ist, der mit einem Motor verbunden und dazu vorgesehen ist, sich mit einem Zubehör zu koppeln, das mit einem Arbeitsdrehwerkzeug wie einem Mixerbehälter versehen ist.

8. Elektrohaushaltsgerät nach Anspruch 7, **dadurch gekennzeichnet, dass** der drehbare Mitnehmer (6) am Boden eines durch einen Stutzen (9) begrenzten Hohlraums (7) angeordnet ist.

9. Elektrohaushaltsgerät nach Anspruch 8, **dadurch gekennzeichnet, dass** der Trägerteil (8) einen Ring (8B) aufweist, der sich auf den Stutzen (9) aufschiebt.

10. Elektrohaushaltsgerät nach Anspruch 9, **dadurch gekennzeichnet, dass** der Ring (8b) auf einer Feder (12) aufliegt, die eine axiale Beweglichkeit des Rings (8b) auf dem Stutzen (9) ermöglicht.

11. Elektrohaushaltsgerät nach einem der Ansprüche 8 oder 9, **dadurch gekennzeichnet, dass** der Stutzen (9) von einem Gestell (10) getragen ist, das den Motor abstützt.

12. Elektrohaushaltsgerät nach einem der Ansprüche 8 bis 11, **dadurch gekennzeichnet, dass** die Öffnung (4) Abmessungen aufweist, die größer als die Abmessungen des Hohlraums (7) sind, und dass der Trägerteil (8) am Umfang des Hohlraums (7), der gegenüber der Öffnung (4) liegt, eine Wand (8a) aufweist.

13. Elektrohaushaltsgerät nach Anspruch 12, **dadurch gekennzeichnet, dass** der Hohlraum (7) bezüglich der Mitte der Öffnung (4) außermittig ist.

14. Elektrohaushaltsgerät nach einem der Ansprüche 7 bis 13, **dadurch gekennzeichnet, dass** der drehbare Mitnehmer (6), der durch die Klappe (5) verdeckt sein kann, einem sekundären Antriebsausgang des Geräts entspricht, wobei das Gerät zudem einen drehbaren Hauptmitnehmer aufweist, und dass die Klappe (5) mit einer Vorrichtung zum Erfassen der Stellung der Klappe zusammenwirkt, um die Mitnahme des drehbaren Hauptmitnehmers zu unterbrechen, wenn die Klappe (5) in offener Stellung ist.
